# FASCICULE DE BREVET EUROPEEN

(11) **EP 3 529 870 B1**
(45) Date de publication et mention de la délivrance du brevet: **12.07.2023**
(21) Numéro de dépôt: 16809458.9
(22) Date de dépôt: 18.10.2016
(51) Int. Cl.: H02G 3/04, D04B 1/22

(54) **GAINE DE PROTECTION NOTAMMENT DESTINÉE AU LOGEMENT DE CABLES ELECTRIQUES**
SCHUTZHÜLLE INSBESONDERE ZUR AUFNAHME VON ELEKTRISCHEN KABELN
PROTECTIVE SHEATH IN PARTICULAR INTENDED FOR HOUSING ELECTRICAL CABLES

(43) Date de publication de la demande: 28.08.2019
(73) Titulaire: Safran Aerosystems, 78370 Plaisir (FR)
(72) Inventeur: TENDRON, Yohan, 37510 Ballan Mire (FR); PESTEL, Eric, Tours 37000 (FR)
(74) Mandataire: Casalonga
(86) Numéro de dépôt international: PCT/FR2016/052695
(87) Numéro de publication internationale: WO 2018/073497

(56) Documents cités:
- EP-A1- 2 802 048
- EP-A1- 2 918 539
- WO-A1-99/55945
- WO-A1-2017/147489
- DE-A1-102010 049 386
- FR-A1- 2 812 465
- FR-A1- 3 008 433
- FR-A1- 3 035 276
- US-A- 5 843 542
- US-A1- 2014 262 476
- US-A1- 2014 272 224

## Description

La présente invention concerne une gaine de protection utilisée en particulier, mais pas exclusivement, pour recevoir des fils/câbles électriques, et concerne plus particulièrement une gaine dont le corps est ouvert/fendu sur au moins une partie de sa longueur.

L'invention sera plus particulièrement décrite en regard d'une gaine de protection destinée à recevoir des fils/câbles électriques, sans toutefois y être limitée.

Les gaines de protection de faisceaux électriques sont utilisées dans de nombreux domaines, tels que l'aéronautique, l'aérospatial, l'automobile et d'autres industries, de manière à acheminer en toute sécurité des faisceaux de câbles véhiculant des signaux électriques.

Les gaines sont très diverses selon le domaine d'application et le type de protection exigée (par exemple la protection mécanique et/ou électrique).

On connait des gaines de protection en matière plastique relativement rigide telle qu'en PTFE, fermées sur leur longueur et généralement nervurées ou cannelées. Toutefois, leur rayon de courbure est relativement grand, ce qui complique leur installation dans certains espaces restreints. En outre, dès qu'un fil électrique ou un câble est introduit dans la conduite, il est accessible uniquement aux extrémités de la gaine.

Pour procurer de plus faibles rayons de courbure, il a été proposé des gaines en textile, ouvertes sur leur longueur tout en présentant une zone de recouvrement pour leur fermeture. La fermeture est indispensable pour assurer la protection des câbles logés à l'intérieur.

Ces gaines en raison de leur matériau textile sont aptes à être vrillées en étant tordues sur elles-mêmes selon leur longueur. Elles sont justement tordues sur elles-mêmes au cours de leur l'installation, pour éviter leur écartement ou leur ouverture perpendiculairement à leur corps longitudinal une fois les câbles logés dedans. La torsion ne permet pas la réouverture de la gaine dans le temps.

En outre, une telle gaine, du fait de son ouverture longitudinale, permet d'accéder aux fils électriques ou aux câbles introduits à n'importe quel endroit sur sa longueur.

La présente invention vise une solution alternative à une gaine textile tordue pour fournir une gaine flexible, procurant quand besoin est, de faibles rayon de courbure, donnant accès aux fils électriques ou aux câbles logés à l'intérieur sur sa longueur en tous endroits, tout en minimisant son poids. La gaine de l'invention ne nécessite pas une torsion de la gaine pour son installation afin de la maintenir fermée.

Selon l'invention, la gaine comprend un corps flexible ayant d'une façon générale la forme d'un cylindre, le corps flexible étant fendu selon au moins une certaine longueur et selon un axe longitudinal, et est caractérisée en ce que le corps présente une paroi ajourée et en ce que la gaine est apte à être déformée selon sa longueur pour être condensée/ramassée sur elle-même.

On entend par les termes « condensée », « ramassée », les qualificatifs se rapportant à la gaine telle qu'en considérant une partie rectiligne de la gaine avec une longueur initiale, cette partie rectiligne présente une fois condensée selon sa direction longitudinale, une longueur plus courte, toutefois sans perte de matière. La gaine comporte la même quantité de matière une fois condensée, la matière étant par contre ramassée localement.

La gaine est ajourée en présentant une multitude de mailles. Une fois condensée, le facteur de couverture de la gaine est modifié. Ainsi, dans la partie localement condensée, la gaine est moins ajourée ; les mailles sont resserrées,

La gaine présente une flexibilité à la manière d'un accordéon dans sa direction longitudinale afin d'imposer localement un amas de matière pour permettre de couder la gaine à cet endroit ou à proximité immédiate.

Cet état condensé est obtenu en exerçant sur la gaine une force de poussée dans sa direction longitudinale. Plus exactement, l'opérateur se saisit de la gaine de part et d'autre de l'endroit où est souhaité l'état condensé, en maintenant d'un côté la gaine fixement, il exerce du côté opposé une force de poussée de direction longitudinale à la gaine et vers le côté maintenu fixement, ce qui engendre à la matière d'être ramassée sur elle-même.

Cette configuration de gaine permet très aisément à l'opérateur d'installer la gaine autour des câbles à protéger. Lorsque la gaine est coudée, elle présente un amas de matière au niveau du rayon interne du coude et est apte à s'étendre au niveau du rayon externe de ce même coude, ce qui permet de réaliser des courbures à faibles, voire très faibles rayons, aussi bien à l'état condensé qu'à l'état étendu.

La gaine de protection peut donc suivre un chemin quelconque dans l'espace qui lui est dédié, suivre des contours à grands puis très faibles rayons de courbure établis à proximité immédiate, et donc s'adapter à tout type de profil. Quel que soit le profil imposé à la gaine, celle-ci reste fermée sur elle-même, sans risque d'ouverture.

De plus, sa configuration ajourée permet de minimiser son poids.

Selon une caractéristique, la gaine est apte à garder son état condensé sans la présence de moyens de maintien rapportés. De par sa configuration, une fois à l'état condensé, l'opérateur n'a pas besoin d'exercer ou maintenir une force de compression ou de poussée.

L'opération de maintenir d'un côté la gaine et pousser de l'autre côté est simple de mise en oeuvre et rapide. L'installateur n'a pas, comme par exemple dans l'art antérieur, à exercer une opération de torsion. La gaine de l'invention n'est pas vrillée.

Selon une autre caractéristique, la gaine après avoir été condensée, est apte à recouvrer sa longueur initiale ou être amenée à une longueur intermédiaire tout en conservant un état condensé pour correspondre à la longueur souhaitée. A cet égard, la gaine est destinée à être étirée selon sa direction longitudinale, en exerçant une force de traction dans la direction longitudinale de la gaine.

Avantageusement, la gaine est apte à être figée dans son état condensé, c'est-à-dire qu'une fois condensée localement, elle ne peut plus recouvrir son état initial ou être étirée longitudinalement ; redéployée, L'opération qui est imposée à la gaine sera décrite plus loin.

Ainsi, la gaine de l'invention grâce à sa flexibilité, le fait que sa paroi soit ajourée et son aptitude à être comprimée, lui procure des facultés combinées de légèreté, de souplesse et de maintien en forme de sorte à pouvoir lui imposer un profil spécifique qui correspondra au contour du chemin que la gaine aura à suivre dans son utilisation, tout en procurant quand besoin est tous types de rayon de courbure, y compris très faibles, tout en restant fermée sur elle-même.

La modularité de la longueur de la gaine est réalisable sans endommager le corps de la gaine au regard de sa fonction de protection, c'est-à-dire que le corps de la gaine garde sa fonction protectrice pour les câbles destinés à être logés à l'intérieur dudit corps.

De plus, une fois réduite en longueur, le corps de la gaine reste dans la configuration imposée sans que le diamètre/la section cylindrique du passage intérieur ne soit altéré.

Par ailleurs, en modulant la longueur de la gaine en particulier en la condensant, la matière est alors ramassée sur elle-même, comprimant les portions ajourées les unes contre les autres, ce qui forme une zone davantage serrée de façon à obtenir une portion quasiment obturée.

Par conséquent, la gaine ajourée de l'invention et sa capacité à être rétractée modifie son facteur de couverture. Dans les endroits condensés, les mailles étant resserrées, la matière est localement augmentée, ce qui augmente la capacité de résistance à l'abrasion. Ceci permet, aux endroits condensés, d'agencer des accessoires de fixation de la gaine dans l'environnement de son installation, sans risque d'abîmer les câbles qu'elle protège.

En outre l'ajourage de la paroi permet en fonction de l'application visée pour la gaine de drainer à travers son corps des liquides.

De plus, la réversibilité de son état condensé à son état allongé/déployé permet, lors de l'installation de la gaine, de revenir à tout moment à une longueur intermédiaire ou la longueur initiale si besoin.

Mais il est également possible, si besoin, de figer la gaine à un endroit voulu dans son état condensé.

Enfin, la fente longitudinale de la gaine permet de l'ouvrir pour y loger ou accéder aux câbles à tout moment ; la gaine n'a pas à subir de torsion pour rester fermée après son ouverture, contrairement à une gaine textile de l'art antérieur à corps fendu et torsadé. Par ailleurs, la gaine de l'invention conserve une section transversale circulaire.

Selon l'invention, la gaine conserve sa forme lorsqu'un angle lui est imposé, c'est-à-dire lorsque l'installateur impose une courbure, un profil coudé à la gaine. Cet angle de courbure (rayon pris sur le bord intérieur de la gaine) peut aller jusqu'à un minimum de deux fois le diamètre de gaine sans altération du diamètre de la gaine et sans ouverture du recouvrement.

La gaine de la présente invention présente un corps cylindrique qui est ouvert/fendu suivant un axe longitudinal. La gaine se ferme en se chevauchant sur elle-même.

Avantageusement, la paroi flexible se chevauche pour former une région de chevauchement, de préférence le chevauchement correspondant à un angle d'au plus 130°, notamment entre 65 et 130°, en particulier entre et 70 et 110°. Ce chevauchement améliore le maintien en position fermée de la conduite. La région de chevauchement présente ainsi deux fois l'épaisseur d'autres régions, car elle comprend deux couches de matériau contiguës.

La gaine comporte une multiplicité de mailles/orifices qui sont modulables en longueur parallèlement au corps longitudinal de la gaine.

La modularité de la grandeur des mailles est obtenue par compression ou traction de la gaine selon la direction longitudinale de son corps, en particulier manuellement sans outil.

La gaine est avantageusement faite à partir de fils tricotés. La gaine a été fabriquée par tricotage et non par une opération de tissage.

La gaine comporte des fils formant un maillage, de préférence les mailles à l'état libre (état non condensé) délimitant des trous de l'ordre de entre 3 et 80 mm².

La gaine comporte au moins deux fils, au moins un fil, dit fil de d'ossature, s'étendant dans la direction longitudinale de la gaine, et présentant de préférence un profil sensiblement en une pluralité de sinusoïdes, les sinusoïdes s'étendant transversalement à la direction longitudinale, et au moins un autre fil, dit fil transverse, s'étendant transversalement à la direction longitudinale sous forme d'une pluralité de lignes transversales à l'axe longitudinal de la gaine et espacées les unes des autres lorsque la gaine n'est pas dans un état condensé.

Les sinusoïdes du fil d'ossature forment une multitude de sinusoïdes espacées et parallèles les unes aux autres, chaque sinusoïde s'étendant d'un bord longitudinal au bord longitudinal opposé de la gaine, et cela sur toute la longueur de la gaine.

L'association du fil transverse au fil d'ossature est réalisé par le tricotage du fil transverse avec le fil d'ossature, le fil transverse comprenant des motifs ou boucles, de préférence au motif de chaînette, dans lesquelles passe le fil d'ossature, les boucles formant des lignes transversales au corps longitudinal de la gaine, et espacées les unes des autres, ce qui permet de réaliser une gaine comportant une multiplicité de mailles.

Plus particulièrement, le fil transverse présente un motif répétitif sous la forme de boucles ou d'un motif en chaînette, et ledit fil transverse est associé avec le fil d'ossature de sorte que le fil transverse forme des lignes espacées transversales au corps longitudinal de la gaine, le fil d'ossature formant entre deux lignes transversales du fil transverse une seule sinusoïde s'étendant transversalement au corps longitudinal de la gaine, chaque crête de la sinusoïde passant dans le motif répétitif de deux lignes transversales du fil transverse, de façon que la gaine présente entre deux lignes transversales du fil transverse une pluralité de mailles unitaires adjacentes les unes aux autres dans une direction transversale au corps longitudinal de la gaine.

On entend par « maille unitaire » du fil d'ossature, la présence dans la direction longitudinale d'une maille unique entre deux lignes transversales du fil transverse. Du fait qu'il n'y a qu'une seule sinusoïde entre deux lignes transversales du fil transverse, cela engendre une pluralité de mailles unitaires agencées les unes à côté des autres dans le sens transversal pour former la largeur de la gaine, c'est-à-dire pour former la circonférence de la gaine.

Ainsi, la coopération du fil d'ossature avec les motifs (boucles ou chaînettes) du fil transverse et l'espacement des lignes transversales procurent une multiplicité dans la direction transversale de mailles (unitaires), le fil d'ossature pouvant être maintenu dans deux lignes transversales consécutives ou non du fil transverse.

Le fil d'ossature forme avec deux lignes transversales du fil transverse, une seule sinusoïde engendrant des mailles unitaires entre lesdites deux lignes transversales, les mailles unitaires étant disposées les unes à côté des autres dans la direction transversale à la direction longitudinale de la gaine.

Le fait que les lignes transversales du fil transverse ne soient reliées que par une seule maille, permet à la boucle de la sinusoïde de chaque maille de coulisser dans la boucle de la sinusoïde adjacente qui est disposée de l'autre côté d'une ligne transversale du fil transverse. Une sinusoïde du fil d'ossature reliant deux lignes transversales du fil transverse est apte à coulisser pour s'imbriquer dans la sinusoïde adjacente reliant deux autres lignes transversales du fil transverse,

Les mailles qui sont alignées dans la direction longitudinale de la gaine sont aptes à coulisser longitudinalement pour s'imbriquer les unes dans les autres. L'imbrication les unes dans les autres des mailles alignées dans la direction longitudinale engendre le rapprochement des lignes transversales jusqu'à si besoin l'aboutement entre elles des lignes transversales s'il est nécessaire de comprimer fortement et localement la gaine.

Les mailles de la gaine sont aptes à être resserrées du fait que les sinusoïdes du fil d'ossature sont aptes à s'imbriquer les unes dans les autres dans la direction longitudinale à la gaine, rapprochant alors au moins deux lignes consécutives du fil transverse.

Chaque boucle du fil transverse forme un motif, par exemple du type chainette,
La gaine comprend de préférence un seul fil d'ossature continu sur toute la longueur de la gaine, pour faciliter la fabrication. En variante, la gaine peut comprendre plusieurs fils d'ossature.

La gaine peut comprendre un seul fil transverse ou plusieurs pour former les lignes transverses de boucles.

La gaine comprend plusieurs fils en matériau flexible, souple, de préférence à base de matière plastique.

On entend dans la suite de la description par « fil », un fil (continu) mono ou multi-filamerits ou un fil fait de fibres courtes ou longues.

Pour figer la gaine dans un état condensé, le fil d'ossature présente avantageusement, au niveau d'un bord longitudinal de la gaine, celui agencé à l'extérieur, une extrémité dépassante sur laquelle il est possible de tirer. En tirant sur le fil, cela resserre les boucles de deux lignes consécutives du fil transverse et coince en cet endroit le fil d'ossature, Dans cette partie locale condensée, la gaine ne peut plus être déployée.

Le matériau de la gaine (des fils) est par exemple choisi parmi les matériaux suivants, éventuellement en combinaison : des polymères de type polyamide (PA), para-aramide (PPTA), méta-aramide (PMMA), polypropylène (PP), polyoxyméthylène (POM), polyéthylétherkétone (PEEK), polyester, polysulfone (PSU), polysulfure de phénylène (PPS), polyimide (Pi), polyamide-imide (PAS), polyfluorure de vinylidène (PVDF), polyaryléthercétorie (PAEK), polyetherimide (PEI), PTFE (poiytétrafluoroéthène).

Le fil d'ossature et le fil transverse peuvent être faits d'un matériau présentant la même flexibilité. Le fil d'ossature et le fil transverse doivent être au moins composés d'un mono filament permettant de conférer à la gaine une rigidité suffisante pour maintenir la compression.

La conduite peut intégrer une ou plusieurs fonctionnalités, par exemple par l'ajout de fils spécifiques de blindage électromagnétique. La gaine intègre la fonction de blindage électromagnétique, de préférence en lui associant au moins un fil métallique intégré à la structure (tricotée) de la gaine.

Les fils de la gaine ont par exemple un diamètre compris entre 0,1 et 0,4 mm. Ces dimensions ne sont nullement limitatives.

La présente invention a pour autre objet, non exclusivement, de proposer une conduite flexible qui donne néanmoins accès à son intérieur sur sa longueur.

L'invention propose également une gaine avec un petit rayon de courbure pouvant être obtenu sans torsion.

La présente invention a donc pour objet sans caractère limitatif et exclusif de proposer une conduite destinée à loger des fils électriques, des câbles et autres objets allongés.

Enfin, l'invention est relative à un procédé de mise en œuvre de la gaine de l'invention, comprenant au moins une étape de compression manuelle dans le sens longitudinal de la gaine sans outillage de sorte à condenser localement en au moins un ou plusieurs endroits la gaine.

D'autres objets, caractéristiques et avantages de la présente invention apparaîtront dans la description qui suit à l'aide d'exemples uniquement illustratifs et nullement limitatifs de la portée de l'invention, et à partir des illustrations ci-jointes, dans lesquelles :
- La figure 1 est une vue en perspective d'une gaine de l'invention en position déployée <
- La figure 2 est une vue de la gaine de la figure 1 montrant une portion localisée à l'état condensé ;
- La figure 3 est une vue de la gaine de la figure 2 agencée de manière courbée au niveau de la portion condensée >
- La figure 4 est une vue schématique partielle et de dessus du corps de la gaine à l'état déployé ;
- La figure 5 est une vue de la figure 4 à l'état condensé ;
- La figure 6 est une partielle de dessus de la gaine au niveau d'un bord longitudinal de celle-ci.

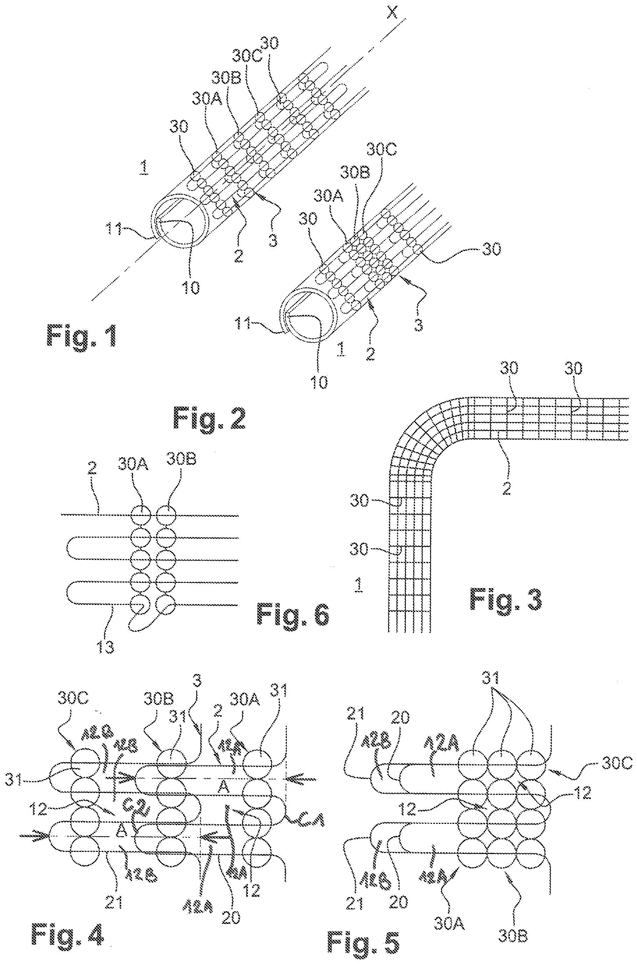

La gaine 1 de l'invention illustrée schématiquement sur les figures 1 à 4 est une gaine de protection mécanique, en particulier contre l'abrasion, et/ou électrique, combinant la fonction si nécessaire de drainage.

Elle est destinée à recevoir des faisceaux de fils électriques ou de câbles, bien quelle puisse loger d'autres objets en particulier longilignes.

La gaine de protection 1 est de forme cylindrique à section circulaire ou autre. Elle présente un corps longitudinal d'axe X.

La gaine 1 est fendue longitudinalement et est refermée sur elle-même, l'un des bords longitudinaux 10 étant rabattu sur et au-delà du bord longitudinal opposé 11. Cette gaine dite auto-fermable facilite son montage autour des câbles, d'autant plus lorsque les câbles sont déjà installés. Elle facilite également la réparation, l'enlèvement de câbles déjà installés à l'intérieur de la gaine ou l'ajout de câbles. Il est possible d'accéder aux câbles n'importe où le long de la gaine.

Le montage de la gaine se fait en écartant les bords longitudinaux 10 et 11 afin de l'ouvrir et permettre de la disposer autour des câbles. En relâchant les bords, la gaine se referme automatiquement par recouvrement des bords 10 et 11.

Le diamètre de la gaine et la portion de recouvrement des bords sont adaptés à la grosseur du faisceau de câbles à protéger.

La gaine 1 est présentée dans son état déployé sur la figure 1, tandis qu'elle est à l'état condensée localement sur la figure 2. La gaine est en effet apte à être condensée.

Le corps de la gaine est ajouré. Il est fait d'une structure constituée de fils tricotés et formant une multitude de mailles 12. Les mailles constituent des trous traversants à travers le corps de la gaine.

A l'état condensé, la gaine 1 présente une longueur plus courte puisqu'une partie d'elle est ramassée sur elle-même.

La gaine peut être coudée comme illustré sur la figure 3 de sorte qu'au niveau du coude, la gaine ne risque pas de s'entrouvrir, l'amas de matière se faisant au niveau du rayon interne du coude.

La gaine comporte une multiplicité de mailles 12 qui sont aptes à s'enchevêtrer les unes dans les autres lorsqu'une force de poussée longitudinale, par exemple par une main, est exercée sur un côté de la partie de la gaine à condenser tandis que l'autre côté de la gaine est maintenue fixement par l'autre main.

La gaine comporte au moins deux fils, à savoir, au moins un fil 2, dit fil d'ossature, s'étendant dans la direction longitudinale de la gaine, et au moins un autre fil 3, dit fil transverse, s'étendant transversalement à la direction longitudinale sous forme d'une pluralité de lignes 30 espacées les unes des autres (figure 1) lorsque la gaine n'est pas dans un état condensé, et rapprochées voire contiguës (figure 2) lorsque la gaine est à l'état condensé.

Les fils d'ossature 2 et transverse 3 sont tricotés ensemble pour obtenir la structure maillée de la gaine de l'invention.

Les fils d'ossature 2 et transverse 3 sont en matière plastique, par exemple en polyamide.

En regard de la figure 4, le fil d'ossature 2 s'étend dans le sens longitudinal de la gaine selon l'axe X. Il présente une forme avec plusieurs sinusoïdes agencées de manière espacées les unes à la suite des autres dans le sens de la longueur, ici deux sinusoïdes 20 et 21 étant représentées.

Chaque sinusoïde 20, 21 s'étend sur la largeur de la gaine, d'un bord longitudinal à l'autre, et transversalement à la direction longitudinale, l'amplitude A de la sinusoïde s'étendant dans la direction longitudinale de la gaine.

Le fil transverse 3 décrit une pluralité de lignes 30, ici trois lignes 30A à 30C étant illustrées, parallèles et espacées les unes des autres, chaque ligne s'étendant selon la largeur de la gaine, c'est-à-dire transversalement à l'axe longitudinal X.

Le fil transverse 3 est formé d'une multitude de boudes 31 tricotées dont le motif est à titre d'exemple préféré une chaînette.

La coopération du fil d'ossature 2 avec les boucles 31 et l'espacement des lignes 30 des boucles procurent la multiplicité de mailles 12.

Le fil d'ossature 2 coopère avec le fil transverse 3 de façon qu'au moins deux sinusoïdes 20 et 21 qui se suivent soient associées à une ligne commune 30B du fil transverse 3, tel qu'illustré sur la figure 4.

Le fil d'ossature 2 passe à travers les boucles 31 du fil transverse 3.

Les boucles sont suffisamment lâches afin que les lignes 30A à 30C, plus particulièrement les boucles 31, puissent coulisser le long des sinusoïdes 20, 21 du fil d'ossature 2.

Dans l'exemple illustré d'association du fil transverse 3 avec le fil d'ossature 2, la première sinusoïde 20 coopère avec deux lignes consécutives 30A et 30B, et la seconde sinusoïde 21 coopère avec deux lignes consécutives 30B et 30C. En variante, le fil d'ossature pourrait coopérer avec deux lignes qui ne sont pas consécutives l'une à l'autre.

Le fil transverse 3 forme donc des motifs répétés tels que les chaînettes 31. Le fil d'ossature 2 est associé (tricoté) avec le fil transverse 3 en passant dans les chainettes 31, et de sorte à former les sinusoïdes 20, 21, une seule sinusoïde reliant deux lignes transversales espacées respectivement, 30A et 30B, 30B et 30C.

Ainsi, deux lignes transversales, ici adjacentes 30A et 30B puis 30B et 30C (figure 4), sont reliées pour n'être séparées que par des mailles unitaires 12A, respectivement 128 agencées les unes à côté des autres dans la direction transversale (correspondant à une sinusoïde). Chaque maille unitaire par exemple 12A est obtenue du fait que le fil d'ossature 2 ne présente qu'une seule sinusoïde entre deux lignes transversales du fil transverse 2, les crêtes opposées d'une sinusoïde (par exemple C1 et C2 sur la figure 4) étant liées aux deux lignes transverses espacées (telles que 30A et 30B). Cette unicité de mailles séparant deux lignes transverses permet le coulissement de chaque maille 12 A d'un côté d'une ligne transverse dans la maille alignée suivante 128 située de l'autre côté de ladite ligne transverse , ce qui aboutit à l'enchevêtrement de la figure 5.

Ainsi, lorsque l'on va exercer une force de poussée sur la gaine, les lignes 30A à 30C coulissent sur le fil transverse 2 et sont rapprochées, tandis que les arches en regard des deux sinusoïdes 20 et 21 et celles suivantes coulissent les unes dans les autres, comme illustré sur la figure 5.

On obtient ainsi une partie condensée de la gaine lorsque plusieurs lignes consécutives 30A à 30C sont aboutées les unes aux autres. Les mailles 12 de la gaine présentent alors des dimensions réduites.

Avantageusement le fil d'ossature 2, présente (figure 6) au niveau d'un bord longitudinal de la gaine, celui agencé à l'extérieur, ici le bord 11, une extrémité dépassante 13 sur laquelle il est possible de tirer afin de figer la condensation de la matière localement. En tirant sur le fil, cela resserre les boucles de deux lignes consécutives 30A et 30B du fil transverse 3 et coince en cet endroit le fil d'ossature 2.Dans cet état condensé, la gaine ne pouvant plus être déployée en cet endroit

Par conséquent, la gaine de l'invention est apte à être condensée à n'importe quel endroit souhaité dans le sens longitudinal et sur n'importe quelle longueur. Elle peut garder une forme condensée de manière pérenne ou non, la forme condensée pouvant être figée en tirant sur un fil transverse,

## Revendications

1. Gaine de protection (1) comprenant un corps flexible ayant d'une façon générale la forme d'un cylindre, le corps flexible étant fendu selon au moins une certaine longueur et selon un axe longitudinal, le corps présentant une paroi ajourée avec des mailles et la gaine étant faite à partir de fils tricotés comptant au moins un fil d'ossature (2) s'étendant dans la direction longitudinale de la gaine et présentant de préférence un profil sensiblement en une pluralité de sinusoïdes qui s'étendent transversalement à la direction longitudinale de la gaine, et au moins un fil transverse (3) s'étendant transversalement à la direction longitudinale de la gaine, la gaine est apte à être déformée selon sa longueur pour être condensée/ramassée sur elle-même, les fils étant faits d'un matériau flexible de sorte que les mailles sont aptes à s'enchevêtrer les unes dans les autres dans la direction longitudinale de la gaine, lorsqu'une force de poussée longitudinale sur le corps est exercée, et le fil transverse (3) forme une pluralité de lignes (30) transversales à l'axe longitudinal de la gaine et espacées les unes des autres lorsque la gaine n'est pas dans un état condensée et comprend des motifs ou boucles (31), de préférence au motif de chainette, dans lesquelles passe le fil d'ossature (2), la coopération du fil d'ossature (2) avec les boucles et l'espacement des lignes de boucles procurant une multiplicité de mailles (12), le fil d'ossature (2) pouvant être maintenu dans deux motifs consécutifs ou non d'une même ligne de motifs constituée par le fil transverse (3).

2. Gaine selon la revendication 1, dans laquelle les mailles (12) sont modulables en longueur parallèlement au corps longitudinal de la gaine, la modularité de la grandeur des mailles (12) étant obtenue par compression ou traction de la gaine selon la direction longitudinale de son corps, en particulier manuellement sans outil.

3. Gaine selon l'une des revendications 1 et 2, dans laquelle elle intègre la fonction de blindage électromagnétique, de préférence en lui associant au moins un fil métallique intégré à la structure de la gaine.

4. Procédé de mise en oeuvre de la gaine selon l'une quelconque des revendications précédentes, comprenant au moins une étape de compression dans le sens longitudinal de la gaine en maintenant d'un côté la gaine et en exerçant du côté opposé une force de poussée de direction longitudinale à la gaine et vers le côté maintenu fixement, de sorte à condenser localement en au moins un ou plusieurs endroits la gaine.

5. Procédé selon la revendication 4, dans lequel après avoir condensé la gaine, la force de compression n'est pas maintenue, la gaine gardant son état condensé.

6. Procédé selon la revendication 4 ou 5, dans lequel après avoir condensé la gaine, on exerce une force de traction pour étirer la gaine de sorte que la gaine recouvre sa longueur initiale ou est amenée à une longueur intermédiaire tout en conservant un état condensé pour correspondre à la longueur souhaitée.

7. Procédé selon l'une quelconque des revendications 4 à 6, dans lequel après avoir condensé la gaine, on tire sur un fil de la gaine de sorte à figer la gaine dans son état condensé.

## Patentansprüche

1. Schutzhülle (1), die einen flexiblen Körper mit im Allgemeinen der Form eines Zylinders umfasst, wobei der flexible Körper entlang mindestens einer gewissen Länge und entlang einer Längsachse geschlitzt ist, wobei der Körper eine durchbrochene Wand mit Maschen aufweist, und wobei die Hülle aus gestrickten Fäden besteht, die mindestens einen Gerüstfaden (2), der sich in der Längsrichtung der Hülle erstreckt und vorzugsweise ein Profil von im Wesentlichen einer Vielzahl von Sinuswellen, die sich quer zur Längsrichtung der Hülle erstrecken, aufweist, und mindestens einen Querfaden (3) umfassen, der sich quer zur Längsrichtung der Hülle erstreckt, wobei die Hülle entlang ihrer Länge verformt werden kann, um zusammengedrückt/um sich selbst gerollt zu werden, wobei die Fäden aus einem flexiblen Material bestehen, sodass die Maschen sich in der Längsrichtung der Hülle ineinanderschlingen können, wenn eine Längsschubkraft auf den Körper ausgeübt wird, und der Querfaden (3) eine Vielzahl von Reihen (30) bildet, die quer zur Längsachse der Hülle verlaufen und voneinander beabstandet sind, wenn sich die Hülle in keinem zusammengedrückten Zustand befindet, und Muster oder Schlaufen (31), vorzugsweise im Kettenmuster, umfasst, in welchen der Gerüstfaden (2) verläuft, wobei das Zusammenwirken des Gerüstfadens (2) mit den Schlaufen und der Abstand der Schlaufenreihen eine Vielzahl von Maschen (12) bereitstellen, wobei der Gerüstfaden (2) in zwei aufeinanderfolgenden oder nicht aufeinanderfolgenden Mustern ein und derselben, vom Querdraht (3) gebildeten Musterreihe gehalten werden kann.

2. Hülle nach Anspruch 1, wobei die Maschen (12) parallel zum Längskörper der Hülle längenmodulierbar sind, wobei die Modulierbarkeit der Größe der Maschen (12) durch Zusammendrücken oder Ziehen der Hülle entlang der Längsrichtung ihres Körpers, insbesondere von Hand ohne Werkzeug, erhalten wird.

3. Hülle nach einem der Ansprüche 1 und 2, wobei diese die Funktion der elektromagnetischen Abschirmung integriert, vorzugsweise, indem ihr mindestens ein in die Struktur der Hülle integrierter Metallfaden beigefügt wird.

4. Verfahren zum Anbringen der Hülle nach einem der vorstehenden Ansprüche, das mindestens einen Schritt des Zusammendrückens der Hülle in der Längsrichtung unter Halten der Hülle auf einer Seite und unter Ausüben einer Schubkraft von der gegenüberliegenden Seite in Längsrichtung auf die Hülle und zu der festgehaltenen Seite hin umfasst, sodass die Hülle an mindestens einer oder mehreren Stellen lokal zusammengedrückt wird.

5. Verfahren nach Anspruch 4, wobei die Druckkraft, nachdem die Hülle zusammengedrückt wurde, nicht aufrechterhalten wird, wobei die Hülle ihren zusammengedrückten Zustand behält.

6. Verfahren nach Anspruch 4 oder 5, wobei, nachdem die Hülle zusammengedrückt wurde, eine Zugkraft ausgeübt wird, um die Hülle auseinanderzuziehen, sodass die Hülle ihre ursprüngliche Länge wieder annimmt oder auf eine Zwischenlänge gebracht wird, während sie zugleich einen zusammengedrückten Zustand beibehält, um der gewünschten Länge zu entsprechen.

7. Verfahren nach einem der Ansprüche 4 bis 6, wobei, nachdem die Hülle zusammengedrückt wurde, an einem Faden der Hülle gezogen wird, um die Hülle in ihrem zusammengedrückten Zustand zu fixieren.

## Claims

1. A protective sheath (1) comprising a flexible body generally having a cylindrical shape, the flexible body being slit over at least a given length and according to a longitudinal axis, the body having an apertured wall with meshes and the sheath being made from knitted threads including at least one framework thread (2) extending in the longitudinal direction of the sheath and preferably having a profile substantially in the form of a plurality of sinusoids which extend transversely to the longitudinal direction of the sheath, and at least one transverse thread (3) extending transversely to the longitudinal direction of the sheath, the sheath is capable of being deformed along its length so as to be condensed/compacted on itself, the threads being made of a flexible material so that the meshes can be entangled into each other in the longitudinal direction of the sheath, when a longitudinal pushing force on the body is exerted and the transverse thread (3) forms a plurality of lines (30) transverse to the longitudinal axis of the sheath and spaced apart from one another when the sheath is not in a condensed state and comprises patterns or loops (31), preferably with a chain stitch pattern, into which the framework thread (2) runs, the cooperation of the framework thread (2) with the loops and the spacing of the loop lines providing a multiplicity of meshes (12), the framework thread (2) being able to be maintained in two consecutive or non-consecutive patterns of the same line of patterns formed by the transverse thread (3).

2. The sheath according to claim 1, wherein the meshes (12) can be modulated lengthwise parallel to the longitudinal body of the sheath, the modularity of the size of the meshes (12) being obtained by compressing or tensioning the sheath according to the longitudinal direction of its body, in particular manually without tools.

3. The sheath according to one of claims 1 and 2, wherein it incorporates the electromagnetic shielding function, preferably by associating at least one metal thread thereto incorporated in the structure of the sheath.

4. A method for implementing the sheath according to any one of the preceding claims, comprising at least one step of compressing the sheath in the longitudinal direction by holding the sheath on one side and by exerting on the opposite side a pushing force with a direction longitudinal to the sheath and towards the side fixedly held, so as to locally condense the sheath in at least one or more location(s).

5. The method according to claim 4, wherein, after having condensed the sheath, the compressive force is not maintained, the sheath keeping its condensed state.

6. The method according to claim 4 or 5, wherein, after having condensed the sheath, a tensile force is exerted to stretch the sheath so that the sheath recovers its initial length or is brought to an intermediate length while preserving a condensed state so as to match with the desired length.

7. The method according to any one of claims 4 to 6, wherein, after having condensed the sheath, a thread of the sheath is pulled on so as to fix the sheath in its condensed state.
